# EUROPEAN PATENT APPLICATION

(11) **EP 0 595 564 A2**
(43) Date of publication of application: **04.05.1994**
(21) Application number: 93308451.9
(22) Date of filing: 22.10.1993
(51) Int. Cl.: G11B 5/72

(54) **Magnetic recording medium**

(30) Priority: 29.10.1992 JP 312639/92
(71) Applicant: TDK Corporation, Chuo-ku, Tokyo-to 103 (JP)
(72) Inventor: Miyazaki, Shinji, Saku-shi, Nagano-ken (JP); Takai, Mitsuru, Kitasaku-gun, Nagano-ken (JP); Kobayashi, Koji, Kitasaku-gun, Nagano-ken (JP)
(74) Representative: Drever, Ronald Fergus

(57) **Abstract**

A magnetic recording medium having a ferromagnetic metal film as a magnetic recording layer with improved durability further comprises a diamond-like protective film formed on the ferromagnetic metal film and consisting of 60-70 at% carbon and 30-40 at% hydrogen, and a lubricant layer formed further thereon.

## Description

### BACKGROUND OF THE INVENTION

This invention relates to a magnetic recording medium having a magnetic recording layer of ferromagnetic metal film, and more particularly to a magnetic recording medium of the character with improved durability.

Technology of magnetic recording media using a Co-Ni, Co-Cr, or other ferromagnetic metal film as the magnetic recording layer has been widely studied and reduced into practice. It is aimed primarily at higher density recording in video, digital, and other recording techniques and at the introduction of smaller, higher-performance recording-reproducing devices than heretofore.

Ferromagnetic metal films generally are worn rather easily by friction with magnetic heads and other sliding members. It has therefore been proposed to apply a lubricant or form a lubricant layer on the ferromagnetic metal film surface to reduce the friction, or to provide a sufficiently hard protective film to increase the wear resistance. For example, Japanese Patent Application Public Disclosure Nos. 132623/1990 and 224132/1991 suggest improvements in the durability and running stability of ferromagnetic metal films by the formation thereof of a diamond-like carbon protective film and by the further formation of a lubricant layer.

Scrutiny of the literature covering those diamond-like carbon films revealed that they are hard owing to relatively high crystallinity but are brittle and tend to peel away from the metallic magnetic layer surface, failing to provide adequate wear resistance even when used in combination with a lubricant. The carbon film taught by Patent Application Public Disclosure No. 132623/1990 contains hydrogen atoms at a concentration of 3 atomic percent or less and the film taught by No. 224132/1991 has a hydrogen concentration of 15 at% (7.5 mol%) or less.

Accordingly, the present invention is intended to reduce the friction and increase the wear resistance, such as still characteristic, of a magnetic recording medium having a magnetic recording layer of ferromagnetic metal film provided with a conventional diamond-like carbon protective film.

### SUMMARY OF THE INVENTION

The present invention provides a magnetic recording medium having a ferromagnetic metal film formed on a non-magnetic base surface, characterized in that a diamond-like protective film consisting of from 60 to 70 atomic percent of carbon and from 30 to 40 atomic percent of hydrogen is formed on the ferromagnetic metal film surface and a lubricant layer is additionally formed thereon.

The invention reduces the friction and increases the wear resistance, such as still characteristic, of a magnetic recording medium having a magnetic recording layer of ferromagnetic metal film.

### DETAILED DESCRIPTION OF THE INVENTION

The diamond-like protective film according to the present invention may be produced by any of conventional methods through proper control of the manufacturing conditions. For example, as taught by Patent Application Public Disclosure No. 132623/1990, such a film may be formed by sputtering through glow discharge of Ar and H₂ using graphite as a target. Other prior art techniques include plasma polymerization of a low-molecular-weight hydrocarbon, such as methane, ethane, or butane, and ionization evaporation whereby such a gas is ionized by glow discharge and then evaporated to form an objective film.

The diamond-like protective film desirably has a composition consisting of 60 to 70 at% carbon and 30 to 40 at% hydrogen. When C/H is 0.5, as in polyethylene, the constituent carbon atoms are arranged in straight chains with no cross-linking. Deviation from that compositional range (C/H = 0.5) produces a cross-linked structure, resulting in a sharp increase in the film strength. At C/H = 0.5 the film is clear, but at C = 60-70 at% and H = 30-40 at%, it becomes black. This is because the H percentage in the C-H structure is smaller and the C-C bonds larger with simultaneous formation of C=C bonds. It represents the progress of cross-linking. Consequent enhancement of strength makes the film as hard as ceramics.

The lubricant layer is formed from a fatty acid, perfluoroalkylcarboxylic acid, perfluoroalkyl polyether, higher alcohol, fatty acid amide, or other similar lubricant, preferably of a fluorinated one.

According to this invention, the resulting diamond-like protective film approaches an organic one having a relatively high hydrogen content. The film thus attains increased softness and flexibility, improved adhesion to a ferromagnetic metal film, and hence enhanced durability. As regards the running stability, the film has been found to pose no problem inasmuch as it is used in combination with a lubricant layer.

Preferred embodiments of the invention will now be described in detail.

The materials that may be used in forming a ferromagnetic metal film include Co, Co-Ni, Co-Ti, Co-O, Co-Mo, Co-Ni-O, Co-Cr, and Co-Cr-Ni alloys. Particularly desirable is a Co-Ni alloy (in a ratio by weight of 70-95 to 30-5), and a composition of an 80 wt% Co-20 wt% Ni system was used in the examples that follow.

The non-magnetic base may be any of known plastic supports, such as a polyamide or polyester. The following examples used polyethylene terephthalate.

The method of forming a ferromagnetic metal film on a non-magnetic surface is, e.g., by electron-beam evaporation, ion plating, or sputtering. Electron-beam evaporation was chosen for the examples below. To be more specific, a Co-Ni alloy held in a crucible was melted by irradiation with an electron beam in a vacuum, and it was evaporated onto a length of polyethylene terephthalate film travelling at a constant speed along the surface of a rotating drum.

A diamond-like film was further formed on the Co-Ni deposited film surface from a mixed gas of CH₄ and H₂ by AF plasmatization.

### Example 1

A 0.2 µm-thick film of a Co-Ni (80:20) alloy was formed on a polyethylene terephthalate surface.

Further, a diamond-like protective film of 100 Å thickness was formed under the following conditions:
- Material: : CH₄:H₂ = 4:1
- Pressure: : 0.05 Torr
- AF: : 100 kHz
- Electric power: : 90 W

The diamond-like protective film thus obtained had a hydrogen content of 30 at%. The film, in turn, was coated with perfluoroalkyl polyether to a thickness of 30 Å as a lubricant layer to provide a magnetic tape.

### Example 2

In Example 1, the conditions for forming the diamond-like film were partly changed as follows. The resulting diamond-like protective film contained 35 at% hydrogen.
- Material: : CH₄:H₂ = 2:1
- Pressure: : 0.05 Torr
- AF: : 100 kHz
- Electric power: : 90 W

### Comparative Example 1

The film-forming conditions for the diamond-like film in Example 1 were partly modified as follows. The diamond-like protective film so obtained contained 45 at% hydrogen.
- Material: : CH₄:H₂ = 1:1
- Pressure: : 0.05 Torr
- AF: : 100 kHz
- Electric power: : 90 W

### Comparative Example 2

The conditions of Example 1 for forming the diamond-like protective film were partly changed as below. The hydrogen content of the resulting diamond-like protective film was 20 at%.
- Material: : CH₄:H₂ = 1:0
- Pressure: : 0.05 Torr
- AF: : 100 kHz
- Electric power: : 90 W

With test specimens of the products in the foregoing Examples and Comparative Examples, their coefficients of friction during initial running and their still characteristics as a measure of running stability were determined. Table 1 summarizes the results. Hardness values represent those of Vickers hardness of the diamond-like protective films before coating with the lubricant.

**Table 1**

| Example | Coefficient of friction | Still char. (min) | Hardness, kg/mm² |
|---|---|---|---|
| Example 1 | 0.22 | 120 | 1800 |
| Example 2 | 0.25 | 100 | 1000 |
| Comp.Ex.1 | 0.38 | 10 | 500 |
| Comp.Ex.2 | 0.40 | 10 | 3000 |

A comparison between the Examples and Comparative Examples shows that the test specimens according to the present invention had improved durability over a conventional specimen, despite their lower hardness values. The tape specimen of Comparative Example 1 was damaged because of inadequate hardness. That of Comparative Example 2 was so hard that it damaqed the head used.

## Claims

1. A magnetic recording medium comprising a non-magnetic base, a ferromagnetic metal film formed on the base, a diamond-like protective film formed on the ferromagnetic metal film, said protective film consisting of from 60 to 70 atomic percent of carbon and from 30 to 40 atomic percent of hydrogen, and a lubricant layer formed further therefrom.

2. A magnetic recording medium according to Claim 1, wherein said protective film is a film deposited by an audio frequency(AF) plasmatization of a mixed gas of CH₄ and H₂.

3. A magnetic recording medium according to Claim 2, wherein said mixed gas has a ratio of CH₄ to H₂ of about 4:1- 2:1.

4. A magnetic recording medium according to Claim 1, wherein said ferromagnetic film is formed from a material selected from Co and Co-Ni, Co-Ti, Co-Mo, Co-O, Co-Ni-O, Co-Cr and Co-Cr-Ni alloys.

5. A magnetic recording medium according to Claim 4, wherein said ferromagnetic film is formed from Co-Ni alloy with 70-95 weight percent of Co and 30-5 weight percent of Ni.

6. A magnetic recording medium according to Claim 5, wherein said ferromagnetic film is formed from Co-Ni alloy with about 80 weight percent of Co and 20 weight percent of Ni.

7. A magnetic recording medium according to Claim 1, wherein said lubricant layer is formed from at least one lubricant selected from fatty acid, perfluoroalkylcarboxylic acid, perfluoroalkyl polyester, higher alcohol, fatty acid amide.
